# EUROPÄISCHE PATENTSCHRIFT

(11) **EP 3 604 951 B1**
(45) Veröffentlichungstag und Bekanntmachung des Hinweises auf die Patenterteilung: **07.06.2023**
(21) Anmeldenummer: 19189385.8
(22) Anmeldetag: 31.07.2019
(51) Int. Cl.: F24F 13/02, F16L 23/02, F16L 25/00, F16L 41/02, F16L 43/00, F16L 57/04

(54) **BRANDGESCHÜTZTE LÜFTUNGSLEITUNG FÜR DIE GEBÄUDEAUSRÜSTUNG**
FIREPROOF VENTILATION DUCT FOR BUILDING EQUIPMENT
CONDUITE DE VENTILATION PROTÉGÉE CONTRE L'INCENDIE POUR ÉQUIPEMENT DE BÂTIMENT

(30) Priorität: 31.07.2018 DE 102018005993
(43) Veröffentlichungstag der Anmeldung: 05.02.2020
(73) Patentinhaber: Rinklin, Karl-Heinz, 79353 Bahlingen a.K. Baden-Württemberg (DE)
(72) Erfinder: Rinklin, Karl-Heinz, 79353 Bahlingen a.K. Baden-Württemberg (DE)
(74) Vertreter: Huwer, Andreas

(56) Entgegenhaltungen:
- DE-A1- 10 043 774
- GB-A- 2 284 989
- GB-A- 2 517 476
- US-A1- 2005 116 470
- US-A1- 2015 101 697

## Beschreibung

Die Erfindung betrifft eine brandgeschützte Lüftungsleitung nach dem Oberbegriff von Patentanspruch 1.

Lüftungsleitungen in Gebäuden mit mehr als zwei Geschossen und Lüftungsleitungen, die Brandabschnitte überbrücken, müssen so beschaffen sein, dass Feuer und Rauch nicht über die Lüftungsleitung in andere Geschosse oder Brandabschnitte übertragen werden können. Hierzu ist es bekannt, Luftkanäle aus Stahlblech zum Zweck des Brandschutzes mit Brandschutzplatten zu umgeben, die aus einem nicht oder zumindest schwer entflammbarem Material bestehen. Bei der Montage einer solchen Lüftungsleitung in einem Gebäude wird zunächst eine Anzahl von Luftkanalmodulen bereitgestellt, aus denen der Luftkanal zusammengesetzt wird. Jedes Luftkanalmodul hat zumindest ein erstes und ein zweites Kanalende, an dem jeweils eine Eintritts- bzw. Austritts-Öffnung für die Luft vorgesehen ist. Außerdem weist das Luftkanalmodul an jedem Kanalende jeweils einen Flanschabschnitt zum Verbinden mit einem dazu passenden Flanschabschnitt eines weiteren Luftkanalmoduls oder dergleichen Komponente einer Lüftungsanlage auf. Die Flanschabschnitte stehen über die Außenflächen der Wandungen des Luftkanals über. In den Flanschabschnitten sind Durchtrittslöcher für Schrauben vorgesehen, mittels denen die einzelnen, aneinandergereihten Luftkanalmodule beim Einbau in das Gebäude zur Bildung eines sich über mehrere Luftkanalmodule erstreckenden Luftkanals miteinander verbunden werden. Die Luftkanalmodule werden beim Einbau an den Flanschabschnitten und/oder an anderen geeigneten Stellen mittels entsprechender Metallhalterungen am Gebäude verankert.

Danach wird der so erhaltene Luftkanal in einem weiteren Arbeitsgang allseitig mit Brandschutzplatten bekleidet. Die Brandschutzplatten werden derart außerhalb des Luftkanals mit einem Abstand zu den Wandungen des Luftkanals montiert, dass sie sich durchgängig über die Flanschabschnitte.hinweg erstrecken, dass sie also sowohl die Wandungen als auch die Flanschabschnitte abdecken. Die Brandschutzplatten werden von Handwerkern getrennt vom Luftkanal am Gebäude befestigt, beispielsweise mit Hilfe entsprechender Halteelemente aus Stahl. Das Bekleiden des Luftkanals mit den Brandschutzplatten ist zeitaufwändig und verursacht hohe Kosten. Die einzelnen Brandschutzplatten werden von Handwerkern individuell zugeschnitten und am Luftkanal positioniert. Da der Luftkanal nach dem Einbau in das Gebäude meist nur noch schlecht zugänglich ist und die Montagearbeiten üblicherweise von unterschiedlichen Firmen ausgeführt werden, ist die Montage der Brandschutzplatten fehleranfällig. Ungünstig ist außerdem, dass die aus den Brandschutzplatten hergestellte Ummantelung relativ viel Bauraum benötigt, weil sie auch die über die Außenfläche der Luftkanalwandungen überstehenden Flanschabschnitte umgibt.

Aus GB 2 517 476 A ist eine brandgeschützte Lüftungsleitung der eingangs genannten Art bekannt, die ein Luftkanalmodul mit quadratischem Querschnitt aufweist, das einen Strömungskanal umgrenzt. Das Luftkanalmodul hat ein erstes und ein zweites Kanalende, an dem jeweils eine Öffnung für den Durchtritt der Luft vorgesehen ist. Das Luftkanalmodul hat Wandungen aus verzinktem Stahlblech und weist an jedem Kanalende jeweils einen Flanschabschnitt zum Verbinden mit einem dazu passenden Flanschabschnitt eines weiteren Luftkanalmoduls auf. Das Luftkanalmodul ist außenseitig allseitig mit Brandschutzplatten aus geschäumtem Kunststoff ummantelt, die an den Flanschabschnitten des Luftkanalmoduls enden. Die aus den Brandschutzplatten gebildete Wärmeisolierung ist an ihrer dem Strömungskanal abgewandten Außenseite mit einer Außenhülle aus verzinktem Stahlblech beschichtet. An der Außenhülle sind Befestigungsflansche vorgesehen, die jeweils mit Hilfe von Befestigungsklammern mit einem zu dem betreffenden Befestigungsflansch passenden Befestigungsflansch einer weiteren Lüftungsleitung fest verbindbar sind.

Die DE 100 43 774 A1 offenbart eine Brandschutzeinrichtung zur Abschottung einer Lüftungsleitung, die als einwandiges Blechrohr mit rundem Querschnitt ausgestaltet ist. Die Brandschutzeinrichtung weist einen zu der Lüftungsleitung passenden Anschlussstutzen auf, der einen etwas kleineren Außendurchmesser hat als der Innendurchmesser der Lüftungsleitung. Der Anschlussstutzen greift in die Lüftungsleitung ein und ist zur Bildung eines Längenausgleichselements, das eine bei einem Brand auftretende Längenausdehnung der Lüftungsleitung kompensieren soll, in der Lüftungsleitung axial verschiebbar. Der Anschlussstutzen weist an seiner Außenmantelfläche eine umlaufende Sicke auf. Am Stirnende der Lüftungsleitung ist ein Gummiring angeordnet, der im normalen Betrieb formschlüssig in die Sicke eingreift. Hierdurch soll ein Längsanschlag für die Lüftungsleitung gebildet werden. Beim Auftreten eines Brandes löst sich der Längsanschlag durch Wärmeeinwirkung.

Aus DE 10 2016 119 899 A1 ist ferner eine wärmeisolierte Lüftungsleitung zur Herstellung einer Lüftungsanlage bekannt. Die Lüftungsleitung hat ein Luftkanalmodul mit rechteckigem Querschnitt, welches aus Stahl- oder Aluminiumblech gefertigt ist. Das Luftkanalmodul hat zumindest ein erstes und ein zweites Kanalende, an dem jeweils eine Öffnung zum Ein - bzw. Ausströmen der Luft vorgesehen ist. Die Enden des Luftkanalmoduls weisen Flanschabschnitte auf, die jeweils mit einem dazu passenden Flanschabschnitt eines weiteren Luftkanalmoduls verbunden werden können, um einen durchgängigen Strömungskanal zu bilden. Die Luftkanalwandung ist allseitig von einer Schutzummantelung umfasst, die ebenfalls aus Stahl- oder Aluminiumblech gefertigt ist. Zwischen der Schutzummantelung und Luftkanalwandung ist eine Zwischenschicht aus Stein- oder Glaswolle angeordnet. Die Schutzummantelung und die Zwischenschicht enden jeweils an den Flanschabschnitten. Somit ergibt sich ein Luftkanalmodul mit einer dreischichtigen Wandung, bei dem die für den Brandschutz notwendige Ummantelung bereits an dem Luftkanalmodul vormontiert ist, so dass die Lüftungsleitung nach ihrem Einbau in ein Gebäude nicht mehr mit einer Isolation und einer Schutzummantelung ausgestattet werden muss. Die DE 10 2016 119 899 A1 offenbart jedoch keine brandgeschützte Lüftungsleitung.

Es besteht deshalb die Aufgabe, eine brandgeschützte Lüftungsleitung der eingangs genannten Art zu schaffen, die auf einfache Weise und mit geringem Zeitaufwand in ein Gebäude eingebaut werden kann. Sie soll bei kompakten Abmessungen eine hohe Feuerwiderstandsklasse ermöglichen. Insbesondere soll die Lüftungsleitung die Feuerwiderstandsklasse L90 ermöglichen, d.h. sie soll eine Feuerwiderstandsdauer von mindestens 90 Minuten aufweisen.

Erfindungsgemäß wird diese Aufgabe mit den Merkmalen des Anspruchs 1 gelöst. Diese sehen vor, dass die Brandschutzplatten dimensionsstabile Platten sind, die aus einem mineralische Grundstoffe enthaltenden Brandschutzmaterial bestehen und an den Flanschabschnitten des Luftkanalmoduls Befestigungsflansche aufweisen, die mit Hilfe von Befestigungselementen mit einem zu dem betreffenden Befestigungsflansch passenden Befestigungsflansch einer weiteren Lüftungsleitung fest verbindbar sind, dass das Luftkanalmodul zumindest einen mit einem ersten Flanschabschnitt verbundenen ersten Luftkanalmodul-Abschnitt und einen weiteren Luftkanalmodul-Abschnitt aufweist, welcher den ersten Luftkanalmodul-Abschnitt zum zweiten Flanschabschnitt hin fortsetzt, und dass das Luftkanalmodul zur Kompensation einer im Brandfall auftretenden Längenausdehnung der Luftkanalmodul-Abschnitte mindestens ein zwischen den Flanschabschnitten angeordnetes Längenausgleichselement aufweist.

Die erfindungsgemäße Lüftungsleitung ist also als fertig vorgefertigtes Lüftungsleitungs-Modul ausgestaltet, bei dem das Luftkanalmodul bereits werksseitig mit Brandschutzplatten bekleidet ist. Da die Brandschutzplatten an den Flanschabschnitten enden, können mehrere Lüftungsleitungs-Module zum Erstellen einer Lüftungsanlage auf einfache Weise an den Befestigungsflanschen der Brandschutzplatten miteinander verbunden werden, beispielsweise mit Hilfe von Befestigungsschrauben, welche dazu passende Lochungen in den Befestigungsflanschen und ggf. den Flanschabschnitten durchsetzen. Die Befestigungsflansche sind zumindest bereichsweise zwischen den Flanschabschnitten angeordnet, derart, dass sie jeweils an einem dem betreffenden Befestigungsflansch zugeordneten Flanschabschnitt zur Anlage kommen.

Ein nachträgliches Bekleiden des Luftkanals mit Brandschutzplatten entfällt somit. Die Länge gerader Lüftungsleitungsmodule kann 1,00 m bis 1,50 m, insbesondere 1,10 m bis 1,40 m und bevorzugt 1,20 m bis 1,25 betragen.

Durch das mindestens eine Längenausgleichselement können sich die Luftkanalmodul-Abschnitte beim Auftreten eines Brands ausdehnen, ohne dass dadurch mechanische Spannungen in die Brandschutzplatten eingeleitet werden, welche die Brandschutzplatten zerstören könnten. Die Luftkanalmodul-Abschnitte sind vorzugsweise luftdicht miteinander verbunden. Zweckmäßigerweise sind die Luftkanalmodule zwischen den Flanschen nicht oder nur derart mit den Brandschutzplatten verbunden, dass die Brandschutzplatten einerseits und das Luftkanalmodul andererseits an der betreffenden Verbindungsstelle in Axialrichtung des Luftkanalmoduls oder Luftkanalmodulabschnitts relativ zueinander verschiebbar sind.

Das Lüftungskanalmodul weist bevorzugt einen rechteckigen oder quadratischen Querschnitt auf. Es kann mit Zuschnitten aus ebenen Brandschutzplatten bekleidet sein, die an den Stellen, an denen sie aneinander angrenzen, miteinander verklebt, verschraubt und/oder verklammert sein können. Die Zuschnitte können bei der Herstellung mit Hilfe entsprechender CNC-gesteuerter Schneidemaschinen automatisch aus größeren Brandschutztafeln ausgeschnitten werden.

Unter einer Brandschutzplatte wird eine dimensionsstabile Platte aus einem nicht brennbaren oder schwer entflammbaren Brandschutzmaterial verstanden. Das Brandschutzmaterial enthält mineralische Grundstoffe, vorzugsweise auf Silikatbasis. Insbesondere kann das Brandschutzmaterial aus zementgebundenem Calciumsilikat bestehen oder dieses enthalten.

Bei einer vorteilhaften Ausgestaltung der Erfindung hat das Luftkanalmodul einen mit dem zweiten Flanschabschnitt verbundenen zweiten Luftkanalmodul-Abschnitt, wobei der weitere Luftkanalmodul-Abschnitt zwischen dem ersten und dem zweiten Luftkanalmodul-Abschnitt angeordnet ist und einen von einer geraden Linie abweichenden Verlauf aufweist, und wobei der weitere Luftkanalmodul-Abschnitt und der zweite Luftkanalmodul-Abschnitt über ein zweites Längenausgleichselement miteinander verbunden sind. Bei dieser Ausgestaltung sind die von den Flanschabschnitten aufgespannten Ebenen quer zueinander angeordnet. Der weitere Luftkanalmodul-Abschnitt kann dabei insbesondere als 30°-, 45°- oder 90°-Stück oder -Bogen ausgestaltet sein, d.h. die von den Flanschabschnitten aufgespannten Ebenen schließen einen Winkel von 30°, 45° bzw. 90° zwischen sich ein. Da jedem Flanschabschnitt jeweils ein eigenes Längenausgleichselement zugeordnet ist, welches eine Längenkompensation orthogonal zu der von dem betreffenden Flanschabschnitt aufgespannten Ebene ermöglicht, wird bei einer durch einen Brand verursachten unterschiedlichen thermischen Ausdehnung zwischen den Luftkanalmodul-Abschnitten und den Brandschutzplatten das Auftreten von mechanischen Spannungen an Brandschutzplatten vermieden.

Der weitere Luftkanalmodul-Abschnitt kann als T-Stück mit einem ersten, einem zweiten und einem dritten T-Stück-Ende ausgestaltet sein, wobei das erste T-Stück-Ende über ein erstes Längenausgleichselement mit dem ersten Luftkanalmodul-Abschnitt, das zweite T-Stück-Ende über ein zweites Längenausgleichselement mit dem zweiten Luftkanalmodul-Abschnitt, und das dritte T-Stück-Ende über ein drittes Längenausgleichselement mit einem dritten Luftkanalmodul-Abschnitt verbunden ist, an dem ein dritter Flanschabschnitt angeordnet ist. Auch bei dieser Ausgestaltung ist jedem Flanschabschnitt jeweils ein eigenes Längenausgleichselement zugeordnet.

Bei einer bevorzugten Ausgestaltung der Erfindung ist das mindestens eine Längenausgleichselement als Teleskopverbindung ausgestaltet, mittels welcher die durch das Längenausgleichselement miteinander verbundenen Luftkanalmodul-Abschnitte axial relativ zueinander verschiebbar miteinander verbunden sind. Dabei greift der von dem einen Flanschabschnitt entfernte Endbereich des mit dem Flanschabschnitt verbundenen Luftkanalmodul-Abschnitts axial verschiebbar in einen Endbereich eines weiteren Luftkanalmodul-Abschnitts ein. Dabei kann die Teleskopverbindung eine Schiebemuffe aufweisen, die durch einen Endbereich eines Luftkanalmodul-Abschnitts gebildet ist, wobei in der Schiebemuffe ein Endbereich eines weiteren Luftkanalmodul-Abschnitts axial verschiebbar geführt ist. Eine solche Teleskopverbindung weist einen einfachen Aufbau auf und ist kostengünstig herstellbar.

Bei einer vorteilhaften Ausführungsform der Erfindung weist die Teleskopverbindung eine Steckmuffe auf, die durch einen Endbereich eines Luftkanalmodul-Abschnitts gebildet ist, wobei der Innenquerschnitt des Endbereichs gegenüber dem Innenquerschnitt eines zu der Steckmuffe benachbarten Bereichs des Luftkanalmodul-Abschnitts erweitert ist, und wobei ein Ende eines weiteren Luftkanalmodul-Abschnitts derart in die Steckmuffe eingreift, dass sich dieses Ende bei einer Längenausdehnung der Luftkanalmodul-Abschnitte axial in Richtung auf den zu der Steckmuffe benachbarten Bereich des zuerst genannten Luftkanalmodul-Abschnitts verschieben kann. Hierdurch wird über die gesamte Länge des Luftkanalmodul ein konstanter Innen- bzw. Strömungskanalquerschnitt des Luftkanalmoduls ermöglicht.

Vorteilhaft ist, wenn das in die Steckmuffe eingreifende Ende des weiteren Luftkanalmodul-Abschnitts bei Raumtemperatur axial um mindestens 5 mm, gegebenenfalls mindestens 10 mm und bevorzugt mindestens 15 mm von dem von diesem Ende entfernten Ende der Steck- oder Schiebemuffe beabstandet ist. Durch diesen Abstand können die bei Bränden üblicherweise an den Luftkanalmodul-Abschnitten auftretenden Längenänderungen im Verhältnis zur Längenänderung der durch die Brandschutzplatten gebildeten Brandschutzumhüllung kompensiert werden.

Bei einer bevorzugten Ausführungsform der Erfindung ist zwischen den Brandschutzplatten und dem Luftkanalmodul-Abschnitt allseitig ein Luftspalt angeordnet. Dieser wirkt wie eine zusätzliche Isolierschicht, die beim Auftreten eines Brandes eine Wärmeübertragung von der im Luftkanalmodul befindlichen Luft auf die Brandschutzplatten erschwert. Bei Auftreten eines Brands kann sich das Luftkanalmodul außerdem in den Luftspalt ausdehnen ohne mit den Brandschutzplatten zu kollidieren.

Bevorzugt ist zum Verbinden eines Wandungsbereichs des Luftkanalmodul-Abschnitts mit einem diesem zugewandten Wandungsbereich einer Brandschutzplatte in dem Luftspalt mindestens ein von den Flanschabschnitten beanstandetes Verbindungselement aus einem Brandschutzmaterial angeordnet. Über das Verbindungselement wird der Wandungsbereichs des Luftkanalmodul-Abschnitts an der Brandschutzplatte abgestützt. Hierdurch werden Schwingungen, die während des Betriebs des Luftkanalmodul-Abschnitts an den Wänden des Luftkanalmodul-Abschnitts auftreten können, gedämpft. Das Verbindungselement ist bevorzugt als Mineralwollklötzchen ausgestaltet.

Bei einer anderen vorteilhaften Ausgestaltung der Erfindung ist zwischen den Brandschutzplatten und dem Luftkanalmodul-Abschnitt allseitig ein Wärmeisoliermaterial angeordnet, insbesondere Mineralwolle. Hierdurch wird während des Betriebs der Lüftungsleitung die Bildung von Kondenswasser an dem Luftkanalmodul-Abschnitt vermieden. Dies ist insbesondere bei Zuluft-Lüftungsleitungen vorteilhaft, welche Luft transportieren, die kälter ist als die Umgebungsluft der Lüftungsleitung. Das Wärmeisoliermaterial ist vorzugsweise derart gewählt, dass es beim Auftreten eines Brands von den Wandungen des Luftkanalmoduls verdrängt bzw. komprimiert werden kann, so dass die Wandungen des Luftkanalmoduls ausdehnen können, ohne die Brandschutzplatten zu zerstören.

Bei einer vorteilhaften Ausführungsform der Erfindung ist die Teleskopverbindung manschettenartig von einer Dichtung aus einem Material umgrenzt, das sich beim Auftreten von Längenänderungen an den Luftkanalmodul-Abschnitten verformt, wobei die Dichtung vorzugsweise stoffschlüssig mit den Außenmantelflächen beider durch die Teleskopverbindung miteinander verbundener Luftkanalmodul-Abschnitte verbunden ist. Die Dichtung kann aus einem Bandmaterial bestehen, das bei der Herstellung der Lüftungsleitung im Bereich der Teleskopverbindung derart um die Luftkanalmodul-Abschnitte herumgewickelt wird, dass es einen zwischen diesen befindlichen Spalt überbrückt und luftdicht abdichtet. Dies ermöglicht eine luftdichte Ausgestaltung des Luftkanalmoduls. Wenn sich die Luftkanalmodul-Abschnitte im Brandfall ausdehnen, verformt sich die Dichtung.

Bevorzugt ist die Dichtung als Kaltschrumpfband ausgestaltet. Dieses kann ein Zweischichtband auf Butylkautschukbasis sein, das eine Schicht aus aktivem Butylkautschuk und eine Polyethylen-Folie als Trägermaterialschicht bzw. als Trennlage aufweist. Die Butylkautschuk-Schicht haftet luftdicht an den Außenwandungen der Luftkanalmodul-Abschnitte.

Nachfolgend sind Ausführungsbeispiele der Erfindung näher erläutert. Es zeigt:
- Fig. 1: einen Längsschnitt durch eine einen geraden Verlauf aufweisende Lüftungsleitung, die ein mit Brandschutzplatten bekleidetes Luftkanalmodul hat,
- Fig. 2: eine Seitenansicht der Lüftungsleitung gemäß Fig. 1,
- Fig. 3A: eine Aufsicht auf einen Flanschabschnitt der Lüftungsleitung gemäß Fig. 1,
- Fig. 3B: eine Darstellung ähnlich Fig. 3A, wobei jedoch die Brandschutzplatten Befestigungsflansche aufweisen, die seitlich über die Flanschabschnitte des Luftkanalmoduls überstehen,
- Fig. 4: einen Querschnitt durch die Lüftungsleitung gemäß Fig. 1,
- Fig. 5A: einen vergrößerten Ausschnitt von Fig. 1, auf dem eine Teleskopverbindung zu sehen ist, die zwei Luftkanalmodul-Abschnitte axial verschiebbar und luftdicht miteinander verbindet,
- Fig. 5B: eine Darstellung ähnlich Fig. 5A, wobei jedoch die Brandschutzplatten Befestigungsflansche aufweisen, die seitlich über die Flanschabschnitte des Luftkanalmoduls überstehen,
- Fig. 6: einen Längsschnitt durch eine brandgeschützte Lüftungsleitung, die als 90°-Bogen ausgestaltet ist,
- Fig. 7: eine Seitenansicht der Lüftungsleitung gemäß Fig. 6,
- Fig. 8: eine Aufsicht auf einen Flanschabschnitt der Lüftungsleitung gemäß Fig. 7,
- Fig. 9: einen Längsschnitt durch eine brandgeschützte Lüftungsleitung, die als T-Stück ausgestaltet ist,
- Fig. 10: eine Seitenansicht der Lüftungsleitung gemäß Fig. 9, und
- Fig. 11: eine Aufsicht auf den mittleren Flanschabschnitt der Lüftungsleitung gemäß Fig. 7.

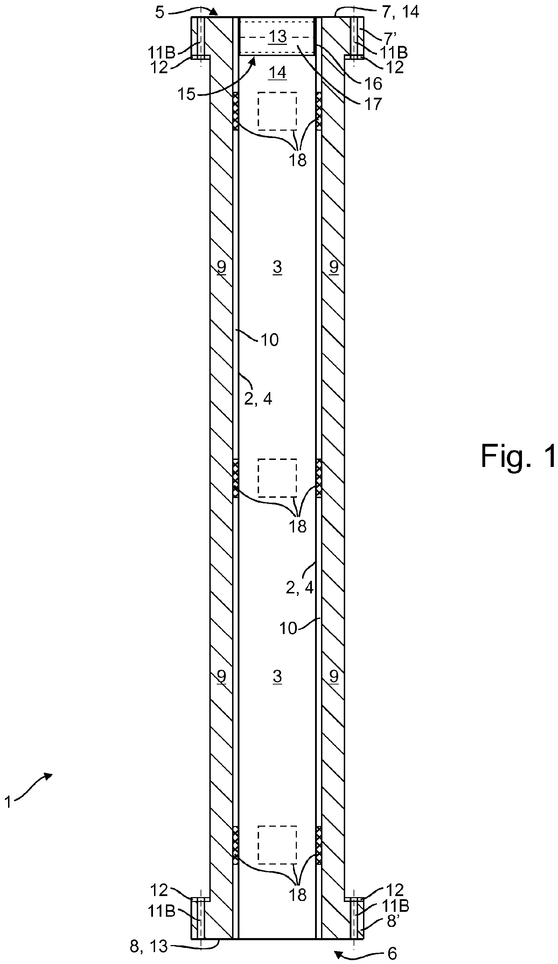

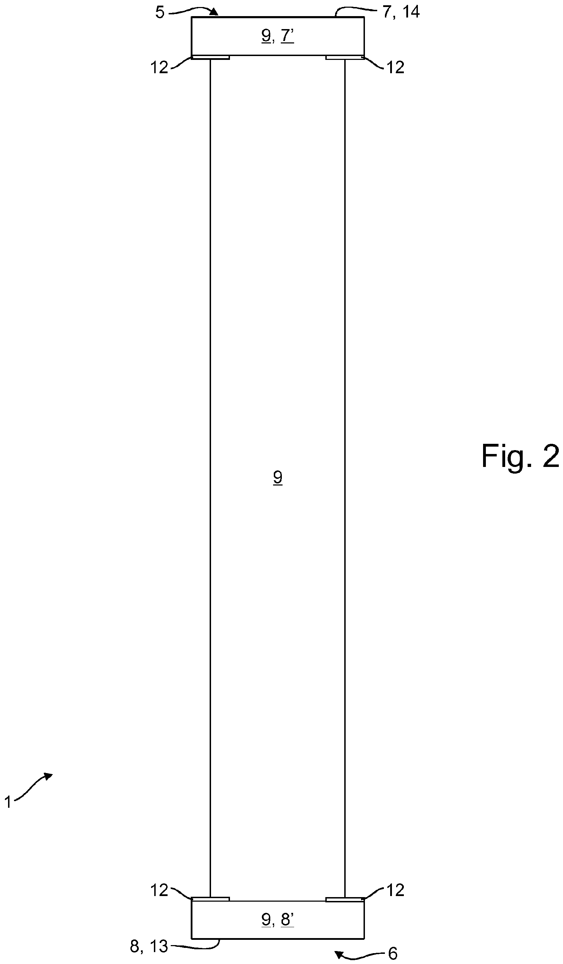

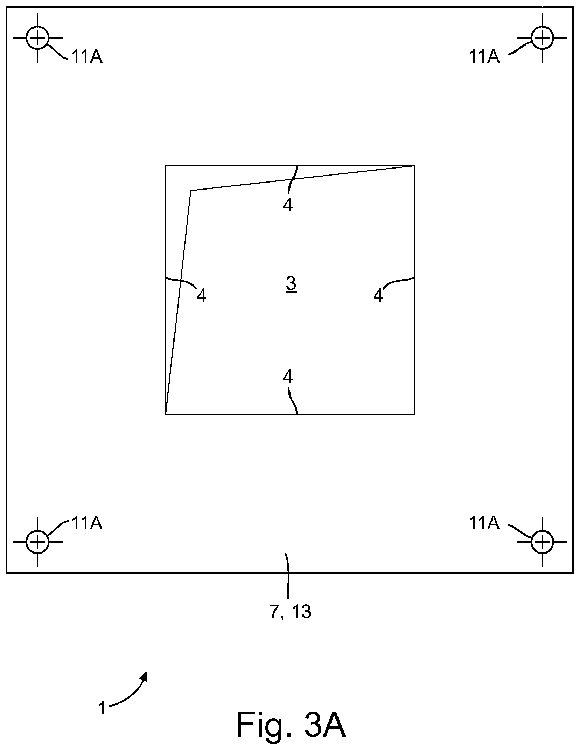

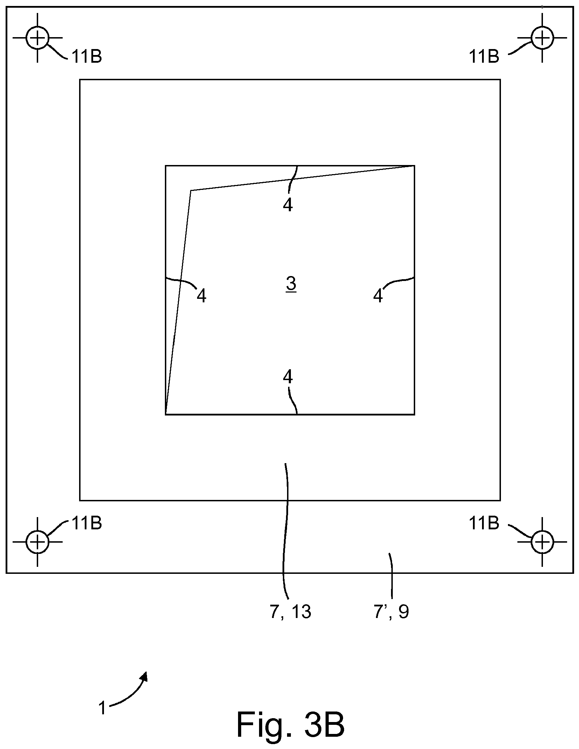

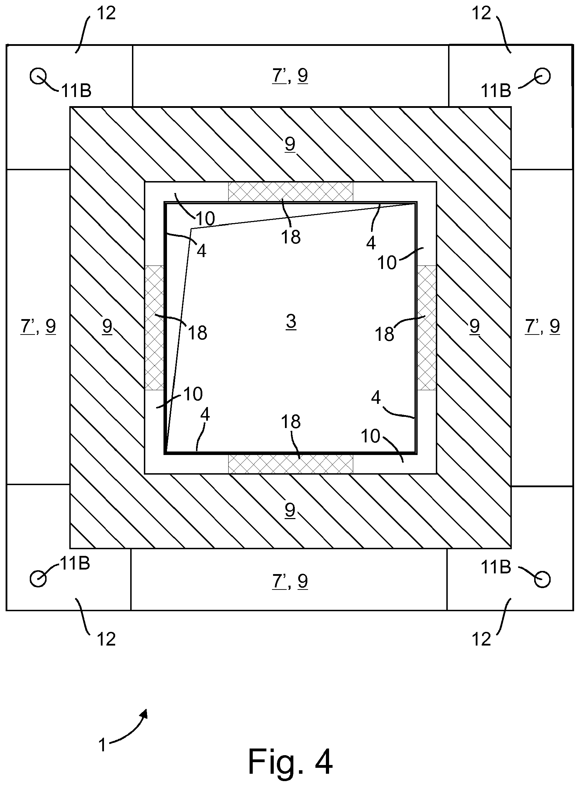

Eine brandgeschützte Lüftungsleitung 1 zum Erstellen einer mehrere miteinander verbundene Lüftungsleitungen 1 aufweisenden Lüftungsanlage für ein Gebäude hat ein Luftkanalmodul 2, welches einen Strömungskanal 3 umgrenzt (Fig. 1 bis 5). In Fig. 3 und 4 ist zu sehen, dass der Strömungskanal 3 einen etwa quadratischen Querschnitt hat.

Der Strömungskanal 3 hat einen geraden Verlauf und ist seitlich von vier Wandungen 4 aus Stahl- oder Aluminiumblech begrenzt. Jeweils zwei einander gegenüberliegende Wandungen 4 sind parallel zueinander angeordnet. Wie in Fig. 1 zu sehen ist, erstreckt sich das Luftkanalmodul 2 von einem ersten Kanalende 5 zu einem zweiten Kanalende 6. An jedem Kanalende 5, 6 ist jeweils eine Öffnung für den Ein- bzw. Austritt der Luft vorgesehen, die von einem Flanschabschnitt 7, 8 umgrenzt wird, der zum Verbinden mit einem dazu passenden Flanschabschnitt 7, 8 eines weiteren Luftkanalmoduls 2 dient. Die von den Flanschabschnitten 7, 8 jeweils aufgespannten Ebenen sind orthogonal zur Längsmittelachse des Strömungskanals 3 angeordnet.

Das Luftkanalmodul ist an seiner dem Strömungskanal 3 abgewandten Außenseite allseitig mit Brandschutzplatten 9 aus einem nichtbrennbaren oder schwer entflammbaren mineralischen Material ummantelt. Die zum Bekleiden der vier Wandungen 4 des Strömungskanals 3 vorgesehenen Brandschutzplatten 9 sind jeweils parallel zu der ihnen zugeordneten Wandung 4 angeordnet und durch einen Luftspalt 10 von dieser beabstandet. Die zum Bekleiden der Flanschabschnitte 7, 8 vorgesehenen Brandschutzplatten 9 liegen jeweils direkt an der den Wandungen 4 zugewandten Rückseite des betreffenden Flanschabschnitts 7, 8 an. Aneinander angrenzende Bereiche der Brandschutzplatten 9 sind an den Stoßstellen durch einen nicht brennbaren oder schwerentflammbaren Klebstoff miteinander verklebt und zusätzlich miteinander verklammert und/oder verschraubt.

Wie in Fig. 1, 2, 4, 5A und 5B erkennbar ist, enden die Brandschutzplatten 9 an den Flanschabschnitten 7, 8. Die Brandschutzplatten 9 weisen an ihren Axialenden Befestigungsflansche 7', 8' auf, die seitlich über einen dazu jeweils benachbarten Abschnitt der betreffenden Brandschutzplatten 9 überstehen und aus einem nicht oder zumindest schwer entflammbarem Material bestehen. Die Befestigungsflansche 7`, 8' können einstückig mit den Brandschutzplatten 9 ausgestaltet oder mit Hilfe von Verbindungselementen, wie z.B. Schrauben, Nieten, Klammern oder dergleichen fest mit den Brandschutzplatten 9 verbunden sein. Die Befestigungsflansche 7`, 8' haben Lochungen 11B, welche die Befestigungsflansche 7', 8' in Richtung der Längsmittelachse des Strömungskanals 3 durchsetzen. In die Lochungen können Befestigungselemente, wie Befestigungsschrauben eingesetzt werden, mittels denen die Lüftungsleitung 1 fest mit einer dazu passenden weiteren Lüftungsleitung 1 verbunden werden kann.

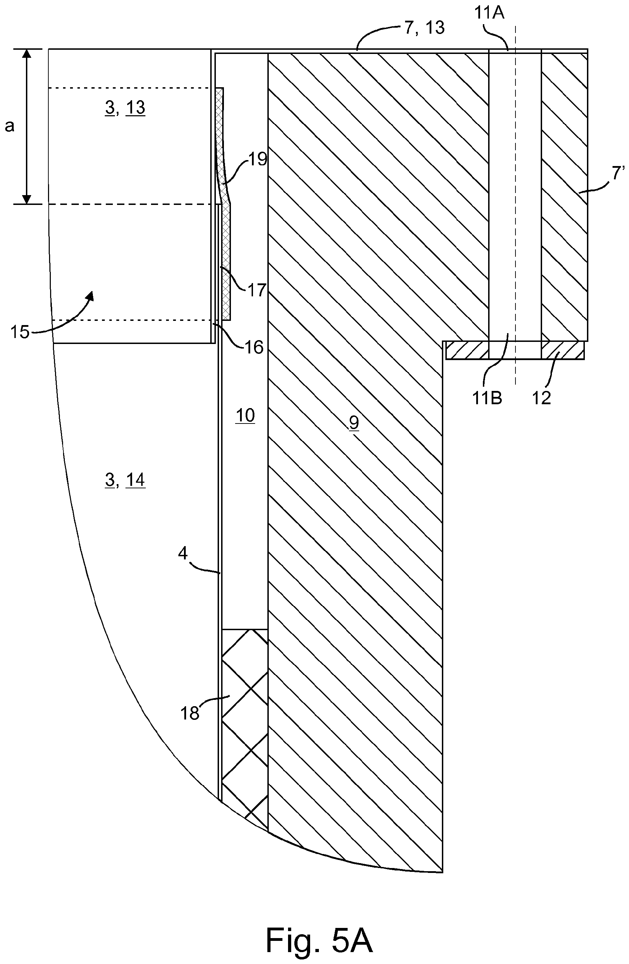

Die Lüftungsleitung 1 ist also als vorgefertigtes Modul ausgestaltet, bei dem das Luftkanalmodul 2 bereits vor dem Einbau des Moduls in die Lüftungsanlage mit Brandschutzplatten 9 bekleidet ist. Dabei sind die Brandschutzplatten 9 an den Flanschabschnitten 7, 8 mit dem Luftkanalmodul 2 verbindbar. Bei dem Ausführungsbeispiel gemäß den Fig. 3A, 5A weisen die Flanschabschnitte 7, 8 und die diese abdeckenden Brandschutzplatten 9 zu diesem Zweck sich überdeckende Lochungen 11A, 11B für den Durchtritt von in der Zeichnung nicht näher dargestellten Befestigungselementen, wie Befestigungsschrauben auf. In Montagestellung durchsetzen die Befestigungsschrauben jeweils eine Lochung 11B einer Brandschutzplatte 9 einer ersten Lüftungsleitung 1, eine Lochung 11A eines Flanschabschnitts 7, 8 der ersten Lüftungsleitung 1, eine Lochung 11A eines Flanschabschnitts 7, 8 einer zweiten Lüftungsleitung 1 und eine Lochung 11B einer Brandschutzplatte 9 der zweiten Lüftungsleitung 1. Zwischen dem Flanschabschnitt 7, 8 der ersten Lüftungsleitung 1 und dem Flanschabschnitt 7, 8 der zweiten Lüftungsleitung 1 ist in Montagestellung eine Dichtung angeordnet, welche die Flanschabschnitte dicht miteinander verbindet.

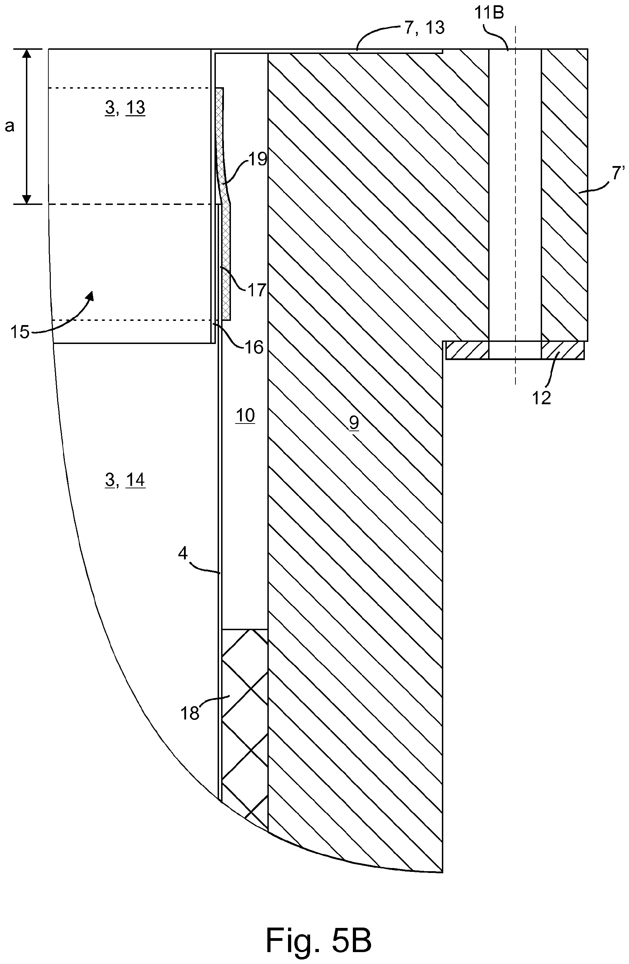

Mit Hilfe der Befestigungsschrauben lassen sich die beiden einander zugeordneten Flanschabschnitte aneinander bzw. gegen die zwischen ihnen befindliche Dichtung anpressen. Der Schraubenkopf der Befestigungsschraube ist gegen eine den Flanschabschnitt 7, 8 der ersten Lüftungsleitung 1 abdeckende erste Brandschutzplatte 9 und die Mutter der Befestigungsschraube ist gegen eine den Flanschabschnitt 7, 8 der zweiten Lüftungsleitung 1 abdeckende zweite Brandschutzplatte 9 abgestützt. Damit die Haltekraft von der Befestigungsschraube möglichst gleichmäßig in das Material der Brandschutzplatten 9 eingeleitet werden kann, ist zwischen dem Schraubenkopf und der Brandschutzplatte 9 sowie zwischen der Mutter und der Brandschutzplatte 9 jeweils ein Unterlegplättchen 12 aus Metall angeordnet (Fig. 5).

Wie in den Fig. 3A, 5A zu sehen ist, können die Befestigungsflansche seitlich über den dazu jeweils benachbarten Flanschabschnitt 7, 8 des Luftkanalmoduls 2 überstehen. Bei dieser Ausgestaltung können die Lochungen 11A in den Flanschabschnitten 7, 8 des Luftkanalmoduls 2 entfallen. In diesem Fall durchsetzen die Befestigungsschrauben in Montagestellung jeweils eine Lochung 11B eines Befestigungsflanschs 7', 8' der ersten Lüftungsleitung 1 und eine Lochung 11B eines Befestigungsflanschs 7', 8' der zweiten Lüftungsleitung 1. Auch hier ist in Montagestellung zwischen dem Flanschabschnitt 7, 8 der ersten Lüftungsleitung 1 und dem Flanschabschnitt 7, 8 der zweiten Lüftungsleitung 1 eine Dichtung angeordnet. Mit Hilfe der Befestigungsschrauben lassen sich die Befestigungsflansche 7', 8' der ersten Lüftungsleitung 1 jeweils an einen Befestigungsflansch 7', 8' der zweiten Lüftungsleitung 1 anpressen. Bei Bedarf können mit Hilfe der Befestigungsschrauben in Montagestellung auch die Flanschabschnitte 7, 8 des Luftkanalmoduls 2 derart an die Axialenden der Brandschutzplatten 9 angepresst werden, dass die Flanschabschnitte 7, 8 zwischen den Brandschutzplatten 9 der ersten und zweiten Lüftungsleitung 1 eingespannt sind. Es ist aber auch denkbar, dass die Flanschabschnitte 7, 8 nur lose zwischen den Brandschutzplatten 9 der ersten und zweiten Lüftungsleitung 1 gehalten sind.

Wie in Fig. 5 erkennbar ist, hat das Luftkanalmodul 2 einen mit einem ersten Flanschabschnitt 7 verbundenen ersten Luftkanalmodul-Abschnitt 13 und einen mit einem weiteren Flanschabschnitt 8 verbundenen weiteren Luftkanalmodul-Abschnitt 14. Wie in Fig. 5 zu sehen ist, hat der erste Luftkanalmodul-Abschnitt 13 in Erstreckungsrichtung der Lüftungsleitung 1 eine wesentlich kürzere Abmessung als der weitere Luftkanalmodul-Abschnitt 14. Die axiale Länge des ersten Luftkanalmodul-Abschnitts 13 entspricht etwa dem Maß, um das der erste Flanschabschnitt 7 seitlich über die vier dem Strömungskanal 3 abgewandten Außenflächen der Wandungen 4 des Luftkanalmoduls 2 übersteht. In der Aufsicht auf die Stirnseiten der Lüftungsleitung 1 laufen die Flanschabschnitte 7, 8 unterbrechungsfrei um den Strömungskanal 3 um.

An ihren einander zugewandten Enden sind die Luftkanalmodul-Abschnitte 13, 14 mittels eines als Teleskopverbindung ausgestalteten Längenausgleichselements 15 axial verschiebbar miteinander verbunden. Die Teleskopverbindung weist eine Schiebemuffe auf, die durch den dem ersten Flanschabschnitt 7 zugewandten Endbereich 17 des zweiten Luftkanalmodul-Abschnitts 14 gebildet ist (Fig. 5). In diese Schiebemuffe greift der dem zweiten Flanschabschnitt 8 zugewandte Endbereich 16 des ersten Luftkanalmodul-Abschnitts 13 ein. Die Außenquerschnittsabmessungen des Endbereichs 16 des ersten Luftkanalmodul-Abschnitts 13 entsprechen den Innenquerschnittsabmessungen des Endbereichs 17 des zweiten Luftkanalmodul-Abschnitts 14 oder sind etwas kleiner als die Innenquerschnittsabmessungen. Bei Raumtemperatur ist das freie Ende des zweiten Luftkanalmodul-Abschnittes14 um ein Abstandsmaß a vom ersten Flanschabschnitt 7 entfernt. Dieses Abstandsmaß beträgt mindestens 15 mm.

Mit Hilfe des Längenausgleichselements 15 kann sich das von dem zweiten Flanschabschnitt 8 entfernte Ende des zweiten Luftkanalmodul-Abschnitts 14 beim Auftreten eines Brands auf den ersten Flanschabschnitt 7 zu verschieben. In entsprechender Weise kann sich das von dem ersten Flanschabschnitt 8 entfernte Ende des ersten Luftkanalmodul-Abschnitts 13 bei einem Brand auf den zweiten Flanschabschnitt 8 zu bewegen. Hierdurch wird vermieden, dass durch eine bei einem Brand auftretende Längenausdehnung der Luftkanalmodul-Abschnitte 13, 14 mechanische Spannungen in die Brandschutzplatten 9 eingebracht werden.

Zwischen den vier Wandungen 4 und den diese abdeckenden Brandschutzplatten 9 ist jeweils ein Luftspalt 10 angeordnet, welcher die Wandungen 4 thermisch gegen die Brandschutzplatten 9 isoliert. Der Luftspalt 10 läuft um den Strömungskanal 3 um und erstreckt sich über die gesamte Länge der aus den Brandschutzplatten 9 gebildeten Brandschutzschicht.

Zwischen den einzelnen Wandungen 4 des zweiten Luftkanalmoduls 2 und den diese jeweils abdeckenden Brandschutzplatten 9 sind quaderförmige Verbindungselemente 18 vorgesehen, die aus Mineralwolle bestehen. Die Verbindungselemente 18 überbrücken den Luftspalt 10 und stützen die Wandungen 4 bereichsweise gegen die Brandschutzplatten 9 ab. Hierdurch werden Schwingungen der Wandungen 4, die beim Betrieb der Lüftungsanlage auftreten können, gedämpft. Die Verbindungselemente 18 haben in einer parallel zur Ebene der ihnen zugeordneten Wandung 4 angeordneten Ebene eine Kantenlänge von mehreren Zentimetern. Sie sind nach allen Seiten von den Rändern der ihnen jeweils zugeordneten Wandung 4 beabstandet und etwa mittig zwischen den Längsrändern der Wandungen 4 angeordnet. Wie in Fig. 5 zu sehen ist, sind an jeder Wandung jeweils mehrere Verbindungselemente 18 in einer sich in Längsrichtung des Luftkanalmoduls 2 erstreckenden Reihe, vorzugsweise in konstanten Abständen zueinander angeordnet.

Die Teleskopverbindung wird manschettenartig von einer durch ein Kaltschrumpfband gebildeten Dichtung 19 umgrenzt. Die Dichtung 19 dichtet den Strömungskanal 3 luftdicht gegen den Luftspalt 10 ab. Die Dichtung 19 besteht zu diesem Zweck aus einem Butylkautschuk-Material, welches stoffschlüssig mit den Außenmantelflächen beider durch die Teleskopverbindung miteinander verbundener Luftkanalmodul-Abschnitte 13, 14 verbunden ist. Das Material der Dichtung 19 ist derart gewählt, dass es sich beim Auftreten von Längenänderungen an den Luftkanalmodul-Abschnitten verformt. Bei größeren Längenänderungen, wie sie bei einem Brand auftreten, wird die Dichtung 19 zerstört.

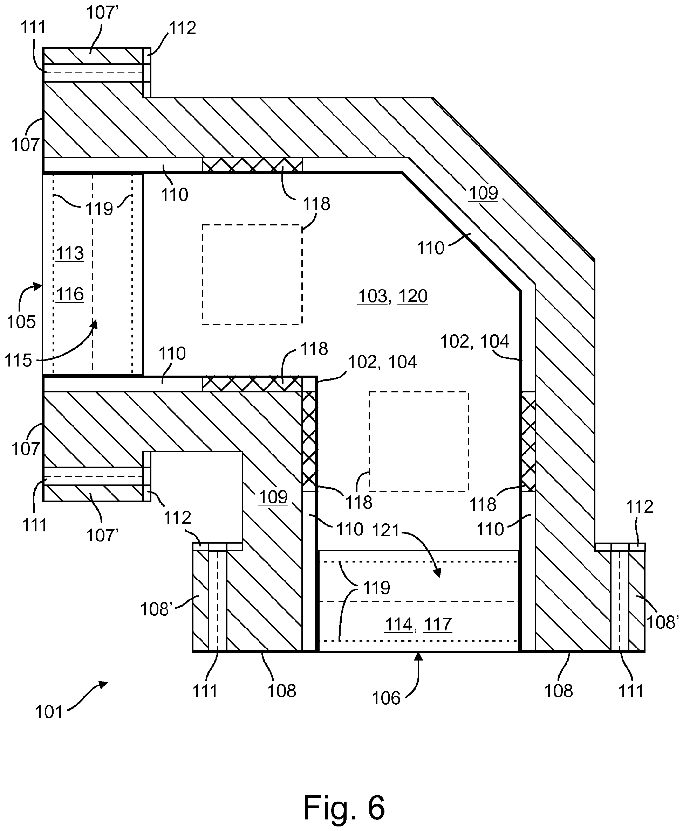

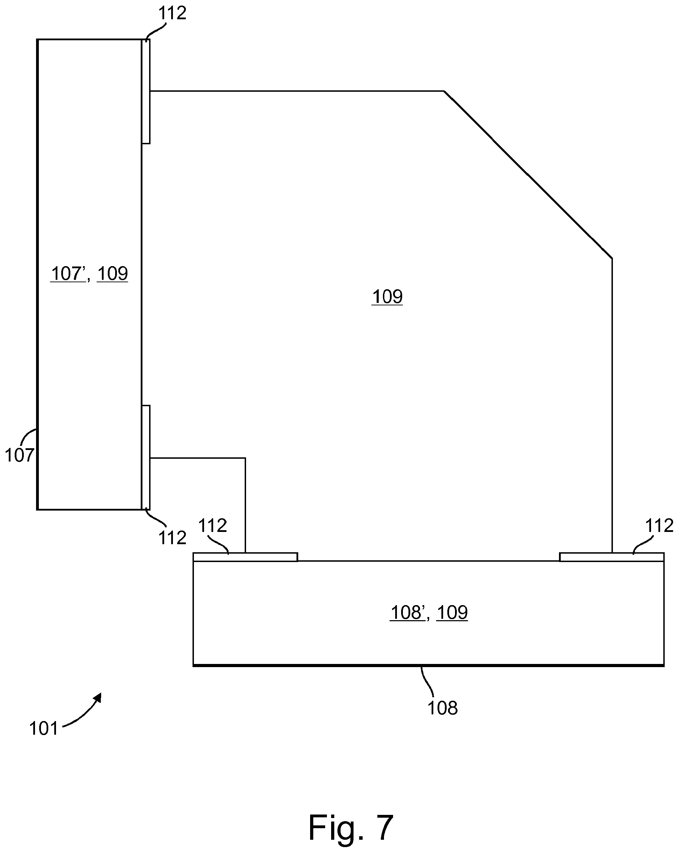

Bei dem in Fig. 6 bis 8 dargestellten Ausführungsbeispiel der Lüftungsleitung 101 weist das Luftkanalmodul 102 zusätzlich zu dem ersten und zweiten Luftkanalmodul-Abschnitt 113, 114 einen weiteren Luftkanalmodul-Abschnitt 120 auf, der zwischen dem ersten und dem zweiten Luftkanalmodul-Abschnitt 113, 114 angeordnet ist und diese miteinander verbindet. Der weitere Luftkanalmodul-Abschnitt 120 ist als 90°-Stück ausgestaltet. Der Strömungskanal 103 des Luftkanalmoduls 102 ist rechteckig ausgestaltet und wird durch Wandungen 104 aus Blech begrenzt. Zwischen den Wandungen 104 und den diese abdeckenden Brandschutzplatten 109 ist jeweils ein Luftspalt 110 angeordnet, welcher die Wandungen 104 thermisch gegen die Brandschutzplatten 109 isoliert. Der Luftspalt 110 läuft um den Strömungskanal 103 um und erstreckt sich über die gesamte Länge der aus den Brandschutzplatten 109 gebildeten Brandschutzschicht.

Das eine Ende des weiteren Luftkanalmodul-Abschnitts 120 ist über ein erstes Längenausgleichselement 115 mit dem vom ersten Flanschabschnitt 107 entfernten Ende des ersten Luftkanalmodul-Abschnitts 113 und das andere Ende des weiteren Luftkanalmodul-Abschnitts 120 ist über ein zweites Längenausgleichselement 121 mit dem vom zweiten Flanschabschnitt 108 entfernten Ende des zweiten Luftkanalmodul-Abschnitts 114 verbunden.

Beide Längenausgleichselemente 115, 121 sind jeweils als Teleskopverbindung ausgestaltet. Der dem ersten Luftkanalmodul-Abschnitt 113 zugewandte Endbereich des weiteren Luftkanalmodul-Abschnitts 120 bildet eine erste Schiebemuffe, in welcher der dem ersten Flanschabschnitt 107 abgewandte Endbereich des ersten Luftkanalmodul-Abschnitts 113 axial verschiebbar angeordnet ist. Die Außenquerschnittsabmessungen des dem ersten Flanschabschnitt 107 abgewandten Endbereich 117 des ersten Luftkanalmodul-Abschnitts 113 entsprechen den Innenquerschnittsabmessungen des dem ersten Flanschabschnitt 107 zugewandten Endbereichs 116 des weiteren Luftkanalmodul-Abschnitts 120 oder sind etwas kleiner als die Innenquerschnittsabmessungen.

Der dem zweiten Luftkanalmodul-Abschnitt 114 zugewandte Endbereich des weiteren Luftkanalmodul-Abschnitts 120 bildet eine zweite Schiebemuffe, in welcher der dem zweiten Flanschabschnitt 108 abgewandte Endbereich 117 des zweiten Luftkanalmodul-Abschnitts 114 axial verschiebbar angeordnet ist. Die zweite Schiebemuffe ist mit ihrer Längsmittelachse rechtwinklig zur Längsmittelachse der ersten Schiebemuffe angeordnet. Die Außenquerschnittsabmessungen des dem zweiten Flanschabschnitt 108 abgewandten Endbereich 117 des zweiten Luftkanalmodul-Abschnitts 114 entsprechen den Innenquerschnittsabmessungen des dem zweiten Flanschabschnitt 8 zugewandten Endbereichs des weiteren Luftkanalmodul-Abschnitts 120 oder sind etwas kleiner als die Innenquerschnittsabmessungen. Bei Raumtemperatur sind freien Enden des weiteren Luftkanalmodul-Abschnittes 120 jeweils um ein Abstandsmaß, welches mindestens 15 mm beträgt, von dem ihnen zugeordneten Flanschabschnitt 107, 108 entfernt.

Jede der beiden Teleskopverbindungen wird manschettenartig von einer durch ein Kaltschrumpfband gebildeten Dichtung 119 umgrenzt. Die Dichtung 119 dichtet den Strömungskanal 3 luftdicht gegen den Luftspalt 110 ab. Die Dichtung 119 entspricht der Dichtung 19 des in Fig. 1 bis 5 abgebildeten Ausführungsbeispiels. Die Flanschabschnitte 107, 108 des in den Fig. 6 bis 8 gezeigten Ausführungsbeispiels entsprechen denen des Ausführungsbeispiels gemäß Fig. 1 bis 5.

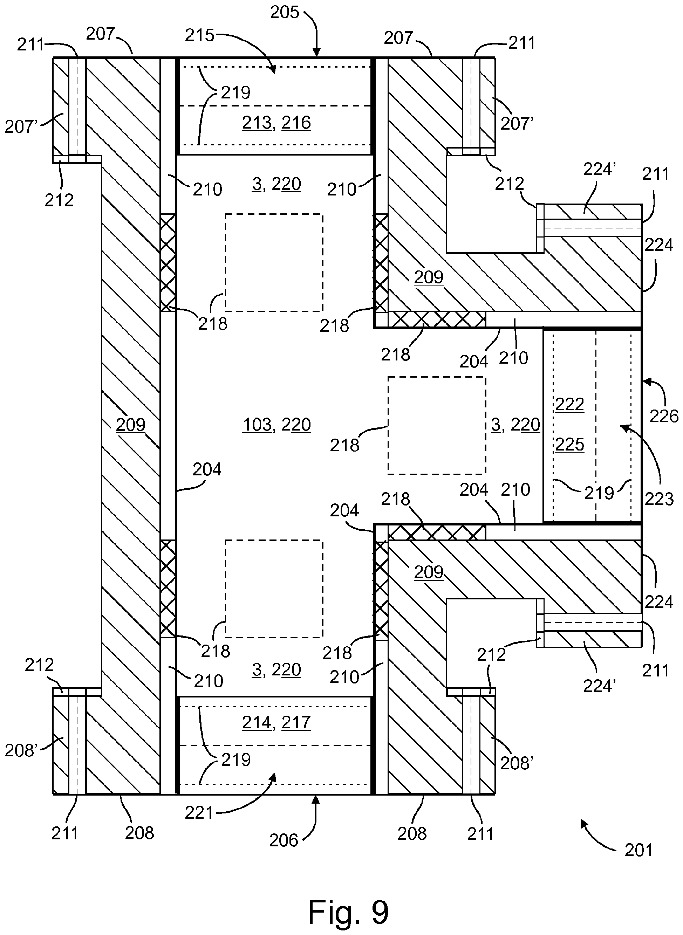

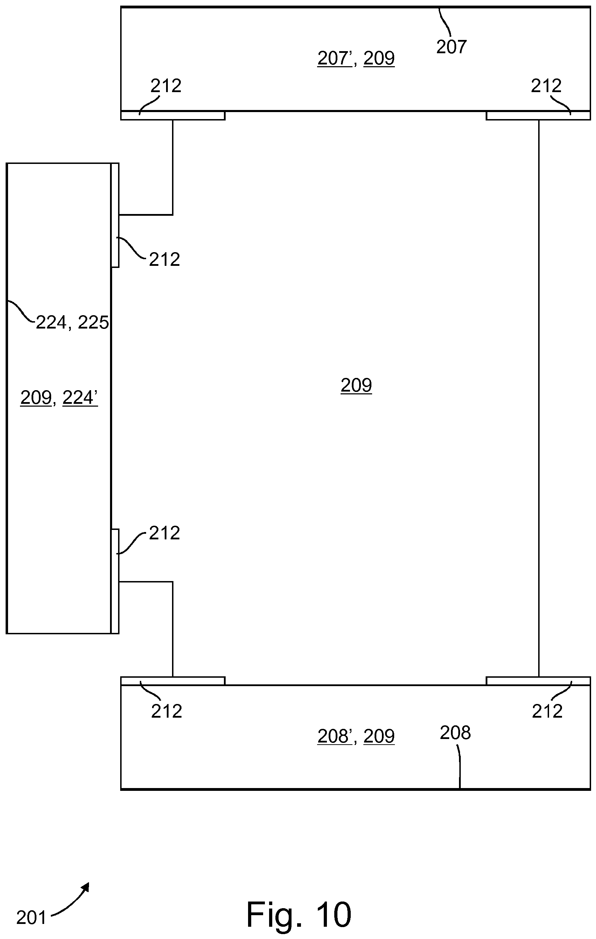

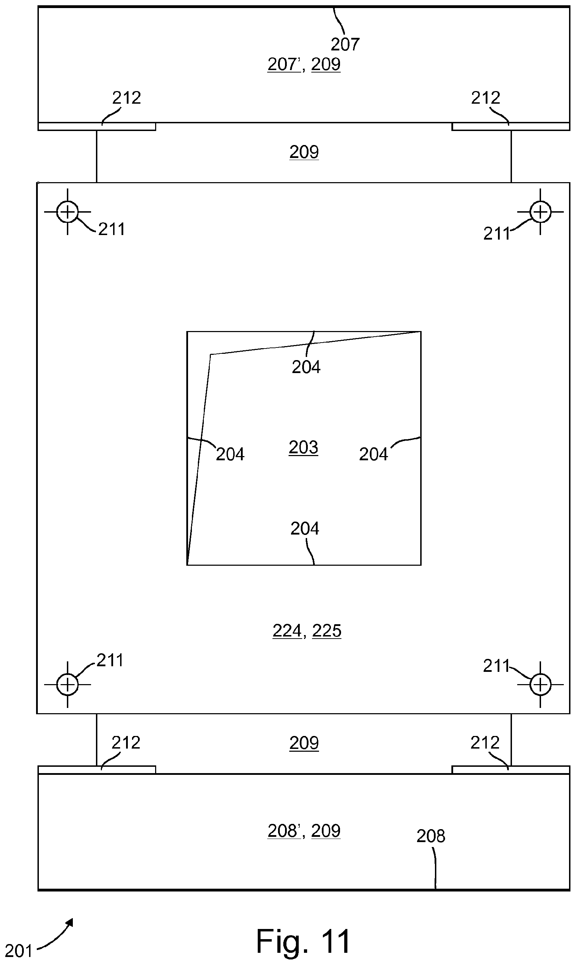

Bei dem in Fig. 9 bis 11 dargestellten Ausführungsbeispiel der Lüftungsleitung 201 hat das Luftkanalmodul 202 zusätzlich zu dem ersten und zweiten Luftkanalmodul-Abschnitt 213, 214 einen dritten Luftkanalmodul-Abschnitt 222. Der weitere Luftkanalmodul-Abschnitt 220 ist bei diesem Ausführungsbeispiel als T-Stück mit einem ersten, einem zweiten und einem dritten T-Stück-Ende ausgestaltet.

Dass das erste T-Stück-Ende über ein erstes Längenausgleichselement 215 mit dem ersten Luftkanalmodul-Abschnitt 213, dass das zweite T-Stück-Ende über ein zweites Längenausgleichselement 221 mit dem zweiten Luftkanalmodul-Abschnitt 214, und dass das dritte T-Stück-Ende über ein drittes Längenausgleichselement 223 mit einem dritten Luftkanalmodul-Abschnitt 222 verbunden ist, an dem ein dritter Flanschabschnitt 224 angeordnet ist. Der Aufbau der Längenausgleichselemente 215, 221, 223 entspricht demjenigen des Längenausgleichselements 15 des in Fig. 1 bis 5 abgebildeten Ausführungsbeispiels.

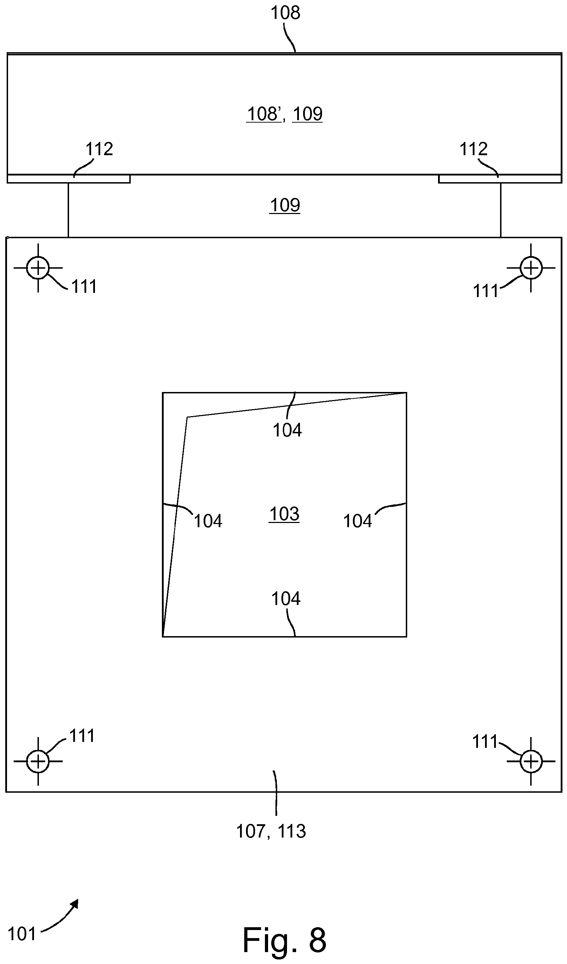

Der Strömungskanal 203 des Luftkanalmoduls 202 gemäß den Fig. 8 bis 11 ist rechteckig ausgestaltet und wird durch Wandungen 204 aus Blech begrenzt. Auch bei diesem Ausführungsbeispiel ist zwischen den Wandungen 204 und den diese abdeckenden Brandschutzplatten 209 jeweils ein Luftspalt 210 angeordnet, welcher die Wandungen 204 thermisch gegen die Brandschutzplatten 209 isoliert. Der Luftspalt 210 läuft um den Strömungskanal 203 um und erstreckt sich über die gesamte Länge der aus den Brandschutzplatten 209 gebildeten Brandschutzschicht. Bei jedem der drei Luftkanalmodul-Abschnitte 213, 214, 222 ist jeweils zwischen jeder Wandung 204 und der diese abdeckenden Brandschutzplatte 209 ein Mineralwollklötzchen als Verbindungselement 218 vorgesehen.

Jede der drei Teleskopverbindungen wird manschettenartig von einer durch ein Kaltschrumpfband gebildeten Dichtung 219 umgrenzt. Die Dichtung 219 dichtet den Strömungskanal 203 luftdicht gegen den Luftspalt 210 ab. Die Dichtung 219 entspricht der Dichtung 19 des in Fig. 1 bis 5 abgebildeten Ausführungsbeispiels. Die Flanschabschnitte 207, 208, 224 des in den Fig. 9 bis 11 gezeigten Ausführungsbeispiels entsprechen denen des Ausführungsbeispiels gemäß Fig. 1 bis 5.

Erwähnt werden soll noch, dass auch bei den in den Fig. 6 bis 11 gezeigten Ausführungsbeispielen die Befestigungsflansche 107', 207', 108', 208', 224' jeweils seitlich über einen benachbarten Abschnitt der ihnen jeweils zugeordneten Brandschutzplatten 9 überstehen. Es sind auch Varianten der in Fig. 6 bis 11 gezeigten Ausführungsbeispiele denkbar, bei denen die Brandschutzplatten 9 seitlich über die Flanschabschnitte 7, 8 überstehende Befestigungsflansche 107', 207', 108', 208', 224' aufweisen. Für diese Varianten gilt die Beschreibung zu den Befestigungsflanschen 7', 8' der Fig. 3B und 5B entsprechend.

## Patentansprüche

1. Brandgeschützte Lüftungsleitung (1, 101, 201) für die Gebäudeausrüstung, mit einem einen eckigen Querschnitt aufweisenden, einen Strömungskanal (3) umgrenzenden Luftkanalmodul (2, 102, 202), das zumindest ein erstes Kanalende (5, 105, 205, 226) und ein zweites Kanalende (6, 106, 206) hat, an dem jeweils eine Öffnung für den Durchtritt der Luft vorgesehen ist, wobei das Luftkanalmodul (2, 102, 202) Wandungen (4, 104, 204) aus Blech hat und an jedem Kanalende (5, 105, 205) jeweils einen Flanschabschnitt (7, 107, 207, 8, 108, 208, 224) zum Verbinden mit einem dazu passenden Flanschabschnitt (7, 107, 207, 8, 108, 208, 224) eines weiteren Luftkanalmoduls (2, 102, 202) oder einer Komponente einer Lüftungsanlage aufweist, und wobei das Luftkanalmodul (2, 102, 202) außenseitig allseitig mit Brandschutzplatten (9, 109, 209) ummantelt ist, die an den Flanschabschnitten (7, 107, 207, 8, 108, 208, 224) des Luftkanalmoduls (2, 102, 202) enden, **dadurch gekennzeichnet, dass** die Brandschutzplatten (9, 109, 209) dimensionsstabile Platten sind, die aus einem mineralische Grundstoffe enthaltenden Brandschutzmaterial bestehen und an den Flanschabschnitten (7, 107, 207, 8, 108, 208, 224) des Luftkanalmoduls (2, 102, 202) Befestigungsflansche (7', 107', 207', 8', 108', 208', 224') aufweisen, die mit Hilfe von Befestigungselementen mit einem zu dem betreffenden Befestigungsflansch (7', 107', 207', 8', 108', 208', 224') passenden Befestigungsflansch einer weiteren Lüftungsleitung (1, 101, 201) fest verbindbar sind, dass das Luftkanalmodul (2, 102, 202) zumindest einen mit einem ersten Flanschabschnitt (7, 107, 207) verbundenen ersten Luftkanalmodul-Abschnitt (13, 113, 213) und einen weiteren Luftkanalmodul-Abschnitt (14, 120, 220) aufweist, welcher den ersten Luftkanalmodul-Abschnitt (13, 113, 213) zu einem zweiten Flanschabschnitt (8, 108, 208) hin fortsetzt, und dass das Luftkanalmodul (2, 102, 202) zur Kompensation einer im Brandfall auftretenden Längenausdehnung der Luftkanalmodul-Abschnitte (13, 113, 213, 14, 114, 214, 120, 220) mindestens ein zwischen den Flanschabschnitten (7, 107, 207, 8, 108, 208) angeordnetes Längenausgleichselement (15, 115, 215, 223) aufweist.

2. Brandgeschützte Lüftungsleitung (101, 201) nach Anspruch 1, **dadurch gekennzeichnet, dass** das Luftkanalmodul (102, 202) einen mit dem zweiten Flanschabschnitt (108, 208) verbundenen zweiten Luftkanalmodul-Abschnitt (114, 214) hat, dass der weitere Luftkanalmodul-Abschnitt (120, 220) zwischen dem ersten Luftkanalmodul-Abschnitt (113, 213) und dem zweiten Luftkanalmodul-Abschnitt (114, 214) angeordnet ist und einen von einer geraden Linie abweichenden Verlauf aufweist, und dass der weitere Luftkanalmodul-Abschnitt (120, 220) und der zweite Luftkanalmodul-Abschnitt (114, 214) über ein zweites Längenausgleichselement (121, 122) miteinander verbunden sind.

3. Brandgeschützte Lüftungsleitung (201) nach Anspruch 1, **dadurch gekennzeichnet, dass** der weitere Luftkanalmodul-Abschnitt (220) als T-Stück mit einem ersten, einem zweiten und einem dritten T-Stück-Ende ausgestaltet ist, dass das erste T-Stück-Ende über ein erstes Längenausgleichselement (215) mit dem ersten Luftkanalmodul-Abschnitt (213), dass das zweite T-Stück-Ende über ein zweites Längenausgleichselement (221) mit dem zweiten Luftkanalmodul-Abschnitt (220), und dass das dritte T-Stück-Ende über ein drittes Längenausgleichselement (223) mit einem dritten Luftkanalmodul-Abschnitt (222) verbunden ist, an dem ein dritter Flanschabschnitt (224) angeordnet ist.

4. Brandgeschützte Lüftungsleitung (1, 101, 201) nach Anspruch 1, **dadurch gekennzeichnet, dass** mindestens ein Längenausgleichselement (15, 115, 215, 121, 221, 223) als Teleskopverbindung ausgestaltet ist, mittels welcher die durch das Längenausgleichselement (15, 115, 215, 121, 221, 223) miteinander verbundenen Luftkanalmodul-Abschnitte (13, 113, 213, 14, 114, 214, 122, 222) axial relativ zueinander verschiebbar miteinander verbunden sind.

5. Brandgeschützte Lüftungsleitung (1, 101, 201) nach Anspruch 4, **dadurch gekennzeichnet, dass** die Teleskopverbindung eine Schiebemuffe aufweist, die durch einen Endbereich (16, 116, 216, 17, 117, 217, 225) eines Luftkanalmodul-Abschnitts (13, 14) gebildet ist, und dass in der Schiebemuffe ein Endbereich eines weiteren Luftkanalmodul-Abschnitts (14, 120, 220) axial verschiebbar geführt ist.

6. Brandgeschützte Lüftungsleitung (1, 101, 201) nach Anspruch 5, **dadurch gekennzeichnet, dass** der in die Steckmuffe eingreifende Endbereich (16, 116, 117, 216, 217, 225) des weiteren Luftkanalmodul-Abschnitts (14, 120, 220) bei Raumtemperatur axial um mindestens 5 mm, gegebenenfalls mindestens 10 mm und bevorzugt mindestens 15 mm von dem von diesem Ende entfernten Ende der Steckmuffe beabstandet ist.

7. Brandgeschützte Lüftungsleitung (1, 101, 201) nach einem der Ansprüche 1 bis 6, **dadurch gekennzeichnet, dass** zwischen den Brandschutzplatten (9, 109, 209) und dem Luftkanalmodul-Abschnitt (13, 113, 213, 14, 114, 214, 120, 220, 222) allseitig ein Luftspalt (10, 110, 210) angeordnet ist.

8. Brandgeschützte Lüftungsleitung (1, 101, 201) nach Anspruch 7 **dadurch gekennzeichnet, dass** zum Verbinden eines Wandungsbereichs (4, 104, 204) des Luftkanalmodul-Abschnitts (13, 113, 213, 14, 114, 214, 120, 220, 222) mit einem diesem zugewandten Wandungsbereich einer Brandschutzplatte (9, 109, 209) in dem Luftspalt (10, 110, 210) mindestens ein von den Flanschabschnitten (7, 107, 207, 8, 108, 208, 224) beanstandetes Verbindungselement (18, 118, 218) aus einem Brandschutzmaterial angeordnet ist.

9. Brandgeschützte Lüftungsleitung (1, 101, 201) nach einem der Ansprüche 2 bis 8, **dadurch gekennzeichnet, dass** zwischen den Brandschutzplatten (9, 109, 209) und dem Luftkanalmodul-Abschnitt (13, 113, 213, 14, 114, 214, 120, 220, 222) allseitig ein Wärmeisoliermaterial angeordnet ist, insbesondere Mineralwolle.

10. Brandgeschützte Lüftungsleitung (1, 101, 201) nach einem der Ansprüche 4 bis 9, **dadurch gekennzeichnet, dass** die Teleskopverbindung manschettenartig von einer Dichtung (19, 119, 219) aus einem Material umgrenzt wird, das sich beim Auftreten von Längenänderungen an den Luftkanalmodul-Abschnitten (13, 113, 213, 14, 114, 214, 120, 220, 222) verformt, und dass die Dichtung (19, 119, 219) vorzugsweise stoffschlüssig mit den Außenmantelflächen beider durch die Teleskopverbindung miteinander verbundener Luftkanalmodul-Abschnitte (13, 113, 213, 14, 114, 214, 120, 220, 222) verbunden ist.

11. Brandgeschützte Lüftungsleitung (1, 101, 201) nach Anspruch 10, **dadurch gekennzeichnet, dass** die Dichtung (19, 119, 219) als Kaltschrumpfband ausgestaltet ist.

## Claims

1. Fireproof ventilation duct (1, 101, 201) for the equipment of a building, having an air duct module (2, 102, 202) which has an angular cross section, defines a flow duct (3) and has at least a first duct end (5, 105, 205, 226) and a second duct end (6, 106, 206) on which is provided in each case one opening for the passage of the air, wherein the air duct module (2, 102, 202) has wall assemblies (4, 104, 204) made from sheet metal, and on each duct end (5, 105, 205) has in each case one flange portion (7, 107, 207, 8, 108, 208, 224) for connecting to a matching flange portion (7, 107, 207, 8, 108, 208, 224) of a further air duct module (2, 102, 202) or a component of a ventilation system, and wherein the air duct module (2, 102, 202) externally on all sides is encased with fireproof boards (9, 109, 209) which terminate at the flange portions (7, 107, 207, 8, 108, 208, 224) of the air duct module (2, 102, 202), **characterized in that** the fireproof boards (9, 109, 209) are dimensionally stable boards which are composed of a fireproof material containing mineral basic materials and on the flange portions (7, 107, 207, 8, 108, 208, 224) of the air duct module (2, 102, 202) have fastening flanges (7', 107', 207', 8', 108', 208', 224') which with the aid of fastening elements are fixedly connectable to a fastening flange of a further ventilation duct (1, 101, 201) that matches the respective fastening flange (7', 107', 207', 8', 108', 208', 224'); **in that** the air duct module (2, 102, 202) has at least a first air duct module portion (13, 113, 213), connected to a first flange portion (7, 107, 207), and a further air duct module portion (14, 120, 220) which extends the first air duct module portion (13, 113, 213) towards a second flange portion (8, 108, 208); and **in that** the air duct module (2, 102, 202), for compensating a longitudinal expansion of the air duct module portions (13, 113, 213, 14, 114, 214, 120, 220) that arises in the event of a fire, has at least one length compensation element (15, 115, 215, 223) which is disposed between the flange portions (7, 107, 207, 8, 108, 208).

2. Fireproof ventilation duct (101, 201) according to Claim 1, **characterized in that** the air duct module (102, 202) has a second air duct module portion (114, 214) which is connected to the second flange portion (108, 208); **in that** the further air duct module portion (120, 220) is disposed between the first air duct module portion (113, 213) and the second air duct module portion (114, 214) and has a profile that deviates from a straight line; and **in that** the further air duct module portion (120, 220) and the second air duct module portion (114, 214) are connected to one another by way of a second length compensation element (121, 122).

3. Fireproof ventilation duct (201) according to Claim 1, **characterized in that** the further air duct module portion (220) is designed as a T-fitting having a first, a second and a third T-fitting end; **in that** the first T-fitting end by way of a first length compensation element (215) is connected to the first air duct module portion (213); **in that** the second T-fitting end by way of a second length compensation element (221) is connected to the second air duct module portion (220); and **in that** the third T-fitting end by way of a third length compensation element (223) is connected to a third air duct module portion (222) on which a third flange portion (224) is disposed.

4. Fireproof ventilation duct (1, 101, 201) according to Claim 1, **characterized in that** at least one length compensation element (15, 115, 215, 121, 221, 223) is designed as a telescopic connection by means of which the air duct module portions (13, 113, 213, 14, 114, 214, 122, 222), which are connected to one another by the length compensation element (15, 115, 215, 121, 221, 223), are connected to one another so as to be axially displaceable relative to one another.

5. Fireproof ventilation duct (1, 101, 201) according to Claim 4, **characterized in that** the telescopic connection has a sliding sleeve which is formed by an end region (16, 116, 216, 17, 117, 217, 225) of an air duct module portion (13, 14); and **in that** an end region of a further air duct module portion (14, 120, 220) is guided so as to be axially displaceable in the sliding sleeve.

6. Fireproof ventilation duct (1, 101, 201) according to Claim 5, **characterized in that** the end region (16, 116, 117, 216, 217, 225) of the further air duct module portion (14, 120, 220) that engages in the plug-in sleeve at room temperature is axially spaced apart from that end of the plug-in sleeve that is distal from this end by at least 5 mm, optionally at least 10 mm, and preferably at least 15 mm.

7. Fireproof ventilation duct (1, 101, 201) according to one of Claims 1 to 6, **characterized in that** an air gap (10, 110, 120) is disposed on all sides between the fireproof boards (9, 109, 209) and the air duct module portion (13, 113, 213, 14, 114, 214, 120, 220, 222).

8. Fireproof ventilation duct (1, 101, 201) according to Claim 7, **characterized in that**, for connecting a wall assembly region (4, 104, 204) of the air duct module portion (13, 113, 213, 14, 114, 214, 120, 220, 222) to a wall assembly region of a fireproof board (9, 109, 209) that faces the former, at least one connecting element (18, 118, 218) which is spaced apart from the flange portions (7, 107, 207, 8, 108, 208, 224) and made from a fireproof material is disposed in the air gap (10, 110, 210).

9. Fireproof ventilation duct (1, 101, 201) according to one of Claims 2 to 8, **characterized in that** a thermal insulation material, in particular mineral wool, is disposed on all sides between the fireproof boards (9, 109, 209) and the air duct module portion (13, 113, 213, 14, 114, 214, 120, 220, 222) .

10. Fireproof ventilation duct (1, 101, 201) according to one of Claims 4 to 9, **characterized in that** the telescopic connection is defined in the manner of a cuff by a seal (19, 119, 219) made from a material which is deformed when longitudinal variations arise on the air duct module portions (13, 113, 213, 14, 114, 214, 120, 220, 222); and **in that** the seal (19, 119, 219) is preferably connected in a materially integral manner to the external shell faces of the two air duct module portions (13, 113, 213, 14, 114, 214, 120, 220, 222) that are connected to one another by the telescopic connection.

11. Fireproof ventilation duct (1, 101, 201) according to Claim 10, **characterized in that** the seal (19, 119, 219) is designed as cold shrink tape.

## Revendications

1. Conduite de ventilation protégée contre l'incendie (1, 101, 201) pour l'équipement de bâtiments, avec un module de canal d'air (2, 102, 202) présentant une section transversale angulaire, délimitant un canal d'écoulement (3), qui a au moins une première extrémité de canal (5, 105, 205, 226) et une deuxième extrémité de canal (6, 106, 206), sur laquelle est prévue respectivement une ouverture pour le passage de l'air, le module de canal d'air (2, 102, 202) ayant des parois (4, 104, 204) en tôle et présentant respectivement à chaque extrémité de canal (5, 105, 205) une section de bride (7, 107, 207, 8, 108, 208, 224) pour la liaison à une section de bride correspondante (7, 107, 207, 8, 108, 208, 224) d'un autre module de canal d'air (2, 102, 202) ou d'un composant d'une installation de ventilation, et le module de canal d'air (2, 102, 202) étant enveloppé de tous côtés à l'extérieur avec des plaques de protection contre l'incendie (9, 109, 209) qui se terminent au niveau des sections de bride (7, 107, 207, 8, 108, 208, 224) du module de canal d'air (2, 102, 202), **caractérisée en ce que** les plaques de protection contre l'incendie (9, 109, 209) sont des plaques de dimensions stables, qui sont constituées d'un matériau de protection contre l'incendie contenant des substances de base minérales et qui présentent au niveau des sections de bride (7, 107, 207, 8, 108, 208, 224) du module de canal d'air (2, 102, 202) des brides de fixation (7', 107', 207', 8', 108', 208', 224') qui peuvent être reliées de manière fixe à l'aide d'éléments de fixation à une bride de fixation d'une autre conduite de ventilation (1, 101, 201) correspondant à la bride de fixation concernée (7', 107', 207', 8', 108', 208', 224'), **en ce que** le module de canal d'air (2, 102, 202) présente au moins une première section de module de canal d'air (13, 113, 213) reliée à une première section de bride (7, 107, 207) et une autre section de module de canal d'air (14, 120, 220) qui prolonge la première section de module de canal d'air (13, 113, 213) vers une deuxième section de bride (8, 108, 208), et **en ce que** le module de canal d'air (2, 102, 202) présente au moins un élément de compensation longitudinale (15, 115, 215, 223) agencé entre les sections de bride (7, 107, 207, 8, 108, 208) pour compenser une dilatation longitudinale des sections de module de canal d'air (13, 113, 213, 14, 114, 214, 120, 220) survenant en cas d'incendie.

2. Conduite de ventilation protégée contre l'incendie (101, 201) selon la revendication 1, **caractérisée en ce que** le module de canal d'air (102, 202) a une deuxième section de module de canal d'air (114, 214) reliée à la deuxième section de bride (108, 208), **en ce que** l'autre section de module de canal d'air (120, 220) est agencée entre la première section de module de canal d'air (113, 213) et la deuxième section de module de canal d'air (114, 214) et présente un tracé différent d'une ligne droite, et **en ce que** l'autre section de module de canal d'air (120, 220) et la deuxième section de module de canal d'air (114, 214) sont reliées entre elles par l'intermédiaire d'un deuxième élément de compensation longitudinale (121, 122).

3. Conduite de ventilation protégée contre l'incendie (201) selon la revendication 1, **caractérisée en ce que** l'autre section de module de canal d'air (220) est conçue sous forme de raccord en T avec une première, une deuxième et une troisième extrémité de raccord en T, **en ce que** la première extrémité de raccord en T est reliée par l'intermédiaire d'un premier élément de compensation longitudinale (215) à la première section de module de canal d'air (213), **en ce que** la deuxième extrémité de raccord en T est reliée par l'intermédiaire d'un deuxième élément de compensation longitudinale (221) à la deuxième section de module de canal d'air (220), et **en ce que** la troisième extrémité de raccord en T est reliée par l'intermédiaire d'un troisième élément de compensation longitudinale (223) à une troisième section de module de canal d'air (222), sur laquelle est agencée une troisième section de bride (224).

4. Conduite de ventilation protégée contre l'incendie (1, 101, 201) selon la revendication 1, **caractérisée en ce qu'**au moins un élément de compensation longitudinale (15, 115, 215, 121, 221, 223) est conçu sous forme de liaison télescopique au moyen de laquelle les sections de module de canal d'air (13, 113, 213, 14, 114, 214, 122, 222) reliées entre elles par l'élément de compensation longitudinale (15, 115, 215, 121, 221, 223) sont reliées entre elles de manière à pouvoir coulisser axialement les unes par rapport aux autres.

5. Conduite de ventilation protégée contre l'incendie (1, 101, 201) selon la revendication 4, **caractérisée en ce que** la liaison télescopique présente un manchon coulissant formé par une zone d'extrémité (16, 116, 216, 17, 117, 217, 225) d'une section de module de canal d'air (13, 14), et **en ce qu'**une zone d'extrémité d'une autre section de module de canal d'air (14, 120, 220) est guidée de manière axialement coulissante dans le manchon coulissant.

6. Conduite de ventilation protégée contre l'incendie (1, 101, 201) selon la revendication 5, **caractérisée en ce que** la zone d'extrémité (16, 116, 117, 216, 217, 225) de l'autre section de module de canal d'air (14, 120, 220) engagée dans le manchon d'emboîtement est espacée axialement à température ambiante d'au moins 5 mm, éventuellement d'au moins 10 mm et de préférence d'au moins 15 mm de l'extrémité du manchon d'emboîtement espacée de cette extrémité.

7. Conduite de ventilation protégée contre l'incendie (1, 101, 201) selon l'une quelconque des revendications 1 à 6, **caractérisée en ce qu'**un espace d'air (10, 110, 210) est agencé de tous côtés entre les plaques de protection contre l'incendie (9, 109, 209) et la section de module de canal d'air (13, 113, 213, 14, 114, 214, 120, 220, 222).

8. Conduite de ventilation protégée contre l'incendie (1, 101, 201) selon la revendication 7, **caractérisée en ce que**, pour la liaison d'une zone de paroi (4, 104, 204) de la section de module de canal d'air (13, 113, 213, 14, 114, 214, 120, 220, 222) à une zone de paroi tournée vers celle-ci d'une plaque de protection contre l'incendie (9, 109, 209) est agencé dans l'espace d'air (10, 110, 210) au moins un élément de liaison (18, 118, 218) en un matériau de protection contre l'incendie espacé des sections de bride (7, 107, 207, 8, 108, 208, 224).

9. Conduite de ventilation protégée contre l'incendie (1, 101, 201) selon l'une quelconque des revendications 2 à 8, **caractérisée en ce qu'**un matériau d'isolation thermique, notamment de la laine minérale, est agencé de tous côtés entre les plaques de protection contre l'incendie (9, 109, 209) et la section de module de canal d'air (13, 113, 213, 14, 114, 214, 120, 220, 222).

10. Conduite de ventilation protégée contre l'incendie (1, 101, 201) selon l'une quelconque des revendications 4 à 9, **caractérisée en ce que** la liaison télescopique est délimitée à la manière d'une manchette par un joint d'étanchéité (19, 119, 219) en un matériau qui se déforme lors de la survenue de variations longitudinales sur les sections de module de canal d'air (13, 113, 213, 14, 114, 214, 120, 220, 222), et **en ce que** le joint d'étanchéité (19, 119, 219) est relié de préférence par liaison de matière aux surfaces d'enveloppe extérieures des deux sections de module de canal d'air (13, 113, 213, 14, 114, 214, 120, 220, 15 222) reliées entre elles par la liaison télescopique.

11. Conduite de ventilation protégée contre l'incendie (1, 101, 201) selon la revendication 10, **caractérisée en ce que** le joint d'étanchéité (19, 119, 219) est conçu sous forme de bande de rétraction à froid.
